# EUROPÄISCHE PATENTSCHRIFT

(11) **EP 3 837 135 B1**
(45) Veröffentlichungstag und Bekanntmachung des Hinweises auf die Patenterteilung: **05.10.2022**
(21) Anmeldenummer: 19755271.4
(22) Anmeldetag: 06.08.2019
(51) Int. Cl.: B60N 3/00, B60N 2/42, B60N 2/427, B61D 37/00

(54) **TISCH FÜR EIN FAHRZEUG**
TABLE FOR A VEHICLE
TABLE POUR UN VÉHICULE

(30) Priorität: 13.08.2018 AT 506882018
(43) Veröffentlichungstag der Anmeldung: 23.06.2021
(73) Patentinhaber: Seisenbacher GmbH, 3341 Ybbsitz (AT)
(72) Erfinder: BURGGRAF, Lorenz, 53123 BONN (DE)
(74) Vertreter: Babeluk, Michael
(86) Internationale Anmeldenummer: PCT/AT2019/060250
(87) Internationale Veröffentlichungsnummer: WO 2020/033982

(56) Entgegenhaltungen:
- EP-A1- 2 956 347
- FR-A1- 2 994 410
- US-A1- 2012 132 767

## Beschreibung

Die Erfindung betrifft einen Tisch für ein Fahrzeug, wobei der Tisch zumindest einen Sockel zur Befestigung an dem Fahrzeug, sowie eine mit dem Sockel verbundene Tischplatte aufweist, und wobei die Tischplatte über eine Verbindungsvorrichtung in Bezug zum Sockel quer zu einer Längsachse des Tisches elastisch bewegbar ist.

In Fahrzeugen, insbesondere Schienenfahrzeugen, ist es für Fahrgäste üblich, Tische anzuordnen, welchen normalerweise insgesamt vier Sitzplätze zugeordnet sind. Dabei sind in der Regel zwei Sitzplätze nebeneinander in Fahrtrichtung und zwei gegenüberliegende entgegen der Fahrtrichtung gerichtet und der Tisch dazwischen angeordnet. Dementsprechend ist die Längsachse des Tisches üblicherweise quer zur Fahrtrichtung des Fahrzeugs ausgerichtet.

Dabei ist mit Fahrtrichtung die Hauptfahrrichtung des Fahrzeuges gemeint, in die sich das Fahrzeug in der Regel hauptsächlich bewegt. In den allermeisten Fällen ist dabei die Fahrtrichtung parallel zur Längsachse des Fahrzeugs.

Zum Schutz der Passagiere, die auf den Sitzen in Fahrtrichtung sitzen, kann der Tisch einen Energieabsorptionsmechanismus aufweisen. Beim Auftreten von starken Beschleunigungen, beispielsweise im Falle einer Notbremsung oder eines Zusammenstoßes wird dabei die Bewegungsenergie der auf den Tisch aufprallenden Fahrgäste zumindest teilweise absorbiert und deren Verletzungsrisiko verringert.

Die EP 2 956 347 B1 beschreibt einen Tisch mit plastisch verformbaren Verbindungselementen, die sich bei einem Aufprall plastisch verformen und so Energie absorbieren. Dies ist aber unvorteilhaft, da nach einem derartigen Vorfall wesentliche Teile des Tisches ausgetauscht werden müssen, um diesen wieder funktionsfähig zu machen. Die damit verbundenen Arbeiten sind aufwändig und teuer.

Die US 2012/0132767 A1 zeigt ein verbessertes System, das elastisch bewegliche Verbindungsarme und -stangen aufweist, die sich vom Sockel vertikal zur Tischplatte erstrecken. Dadurch wird die Zerstörung der Teile bei einer Notbremsung verhindert. Darüber hinaus wird das Risiko von Verletzungen weiter vermindert. Nachteilig ist jedoch, dass es zu Quetschungen von Körperteilen der Fahrgäste kommen kann, da sich die Höhe der Tischplatte bei der Bewegung ändert.

Aufgabe ist damit, einen Tisch der genannten Art bereitzustellen, der ein verringertes Verletzungsrisiko für Fahrgäste bei Auftreten starker Beschleunigungen aufweist. Dabei soll bis zu einer bestimmten Belastungsgrenze nur eine reversible Verformung auftreten, d.h., dass der Tisch selbsttätig in seine Ausgangslage zurückkehrt.

Diese Aufgabe wird erfindungsgemäß dadurch gelöst, dass die Verbindungsvorrichtung zumindest einen, sich im Wesentlichen entlang der Längsachse erstreckenden, elastischen Verbindungsbalken aufweist, über den die Tischplatte mit dem Sockel verbunden ist.

Durch eine derartige Anordnung eines Verbindungsbalkens kann eine rein oder überwiegend horizontale Bewegung der Tischplatte erreicht werden. Dadurch wird die Gefahr von Verletzungen durch den Fahrgast verringert. Die Anordnung ist besonders vorteilhaft, da der Verbindungsbalken direkt unterhalb der Tischplatte angeordnet werden kann, was platzsparend ist und er so vor Beschädigung oder Vandalismus besser geschützt ist.

Dabei sind Richtungs- oder Orientierungsangaben wie oben oder horizontal auf eine bestimmungsgemäße Einbaustellung des Tisches in einem Fahrzeug bezogen.

Die Verbindungsvorrichtung kann über den Verbindungsbalken hinaus weitere elastisch verformbare Elemente aufweisen, die die Energieaufnahme verbessern. Dabei können diese Elemente seriell zum Verbindungsbalken oder parallel zu ihm geschalten sein.

Besonders vorteilhaft ist, wenn der Sockel mit einem sich im Wesentlichen entlang der Längsachse erstreckenden Unterbau fest verbunden ist und die Tischplatte auf dem Unterbau elastisch bewegbar angeordnet ist. Der Unterbau kann so ausgeführt sein, dass der Verbindungsbalken darin - geschützt vor unbefugter Manipulation - angeordnet werden kann. Die Tischplatte kann beweglich auf dem Unterbau angeordnet sein und auf ihm ruhen. Dabei kann der Unterbau und der Sockel auch einstückig ausgeführt sein. Vorzugsweise ist der Unterbau quer zur Längsachse weniger breit ausgeführt, als die Tischplatte. Dies ermöglicht eine Bewegung der Tischplatte quer zur Längsrichtung, auch wenn sie den Unterbau an ihren Seitenkanten zumindest teilweise überragt.

Weiters kann vorgesehen sein, dass der Verbindungsbalken an seinen Enden mit der Tischplatte verbunden ist und in einem mittleren Befestigungsbereich zwischen den Enden mit dem Sockel verbunden ist. Dabei ist der mittlere Befestigungsbereich vorzugsweise mit dem Unterbau verbunden, falls vorgesehen. Dies ist besonders vorteilhaft, da dadurch beide Seiten der Tischplatte gut gefedert werden können. Insbesondere bei Tischen, an denen an einer Seite zwei Plätze für Personen vorgesehen sind, ist dies wichtig. Sind beide Plätze vergeben und treffen beide Personen bei einem Zusammenstoß auf die gleiche Tischseite, so bewegen sich beide Hälften der Tischplatte im Wesentlichen in die gleiche Richtung. Sind die Personen gleich schwer, so kommt es in etwa zu einer parallelen Verschiebung der Tischplatte. Ist nur ein Platz besetzt, so kommt es zu einer Verdrehung der Tischplatte.

In einer bevorzugten Ausführung ist vorgesehen, dass die Verbindungsvorrichtung zumindest ein elastisch verformbares Sekundärelement aufweist. Dieses Sekundärelement kann beispielsweise als vorzugsweise gefederter Stoßdämpfer ausgeführt sein und mit der elastischen Verformung des Verbindungsbalkens zusammenwirken, ihn beispielsweise dämpfen.

Weiter kann vorgesehen sein, dass das elastisch verformbare Sekundärelement parallel zum Verbindungsbalken zwischen der Tischplatte und dem Sockel geschaltet ist. Dabei ist gemeint, dass zumindest zwei Verbindungswege zwischen Tischplatte und Sockel existieren: einer über den Verbindungsbalken und einer über das Sekundärelement. Damit wirken die elastischen Verformungen dieser beiden verformbaren Bauteile parallel und nicht seriell. Alternativ können sie auch seriell zueinander geschalten sein. Dabei muss das Sekundärelement nicht über den gesamten Bewegungsraum der Tischplatte Energie aufnehmen. Es kann auch beispielsweise vorgesehen sein, dass das Sekundärelement einen Leerlauf aufweist und erst ab einem bestimmten Grad an Verschiebung zwischen Tischplatte und Sockel Energie aufnimmt.

Wenn vorgesehen ist, dass das Sekundärelement zwei gegeneinander elastisch verschiebbare Endstücke aufweist und sich diese Endstücke an zwei gegenüberliegenden Auflageflächen des Unterbaus abstützen, und dass zumindest ein Endstück über zumindest ein Auflagestück mit der Tischplatte in Verbindung steht, so kann die Tischplatte beweglich gelagert werden, während das Sekundärelement Energie aufnimmt. Ist an beiden Endstücken je zumindest ein Auflagestück vorgesehen, so kann die Tischplatte in zwei Richtungen elastisch beweglich gelagert werden. Dabei sind die Auflageflächen vorzugsweise entlang einer Achse einander gegenüberliegend angeordnet, wobei die Achse quer zur Längsachse steht. Die Verbindung mit der Tischplatte muss nicht in allen Positionen der Tischplatte für das Auflagestück gegeben sein. Bei Bewegung der Tischplatte in eine Richtung wird über ein Auflagestück ein erstes Endstück in Richtung des zweiten Endstücks gedrückt, welches auf der Auflagefläche aufliegt und sich daran abstützt. Bei Bewegung in die entgegengesetzte Richtung wird das Auflagestück, das mit dem zweiten Endstück verbunden ist, in Richtung des ersten Endstücks gedrückt, das wiederum auf der anderen Auflagefläche aufliegt.

Besonders vorteilhaft ist, wenn ein mit der Tischplatte verbundenes Verbindungsstück quer zur Längsachse vor oder hinter von zumindest einem mit dem Sekundärelement verbundenen Auflagestück angeordnet ist und dass im unbelasteten Zustand der Tischplatte das Verbindungsstück vom Auflagestück beabstandet ist. Dadurch wird der Tischplatte ein Bewegungsspielraum eröffnet, in dem sich das Sekundärelement nicht elastisch verformt. Vorzugsweise tritt in diesem Bereich aber trotzdem zumindest teilweise eine elastische Verformung des Verbindungsbalkens auf. Erst bei einer Bewegung über diesen Spielraum hinaus tritt eine elastische Verformung des Sekundärelements auf.

Es kann vorgesehen sein, dass quer zur Längsachse auf beiden Seiten vom Verbindungsstück und in unbelastetem Zustand beabstandet je ein Auflagestück angeordnet ist. Dadurch kann die elastische Verformung des Sekundärelements ab Überschreiten des Bewegungsspielraumes in beide Richtungen erfolgen. Dies ist besonders vorteilhaft, da insbesondere Zugwaggons oft entlang ihrer Hauptachse in beide Richtungen geführt werden. Dazu ist irrelevant, in welcher Richtung der Tisch eingebaut wird, da er in beide Richtungen elastisch verformbar ist.

Platzsparend ist es, wenn das zumindest eine Verbindungsstück an zumindest einem Ende des Verbindungsbalkens angeordnet ist. Dadurch kann das Verbindungsstück dual zur Verbindung mit dem Verbindungsbalken und zur Verbindung mit dem Sekundärelement verwendet werden.

Wenn der Verbindungsbalken zumindest eine Blattfeder aufweist, vorzugsweise als Blattfederpaket ausgeführt ist, so kann damit eine gute elastische Bewegbarkeit erreicht werden. Die Blattfeder ist vorzugsweise so angeordnet, dass die federnde Hauptwirkungsrichtung in bestimmungsgemäßer Einbaustellung quer zur Längsachse und im Wesentlichen horizontal liegt. Der Vorteil eines Blattfederpakets liegt in der Eigendämpfung, die in Hinblick auf die Energiedissipation vorteilhaft ist.

Besonders vorteilhaft ist, wenn die Tischplatte entlang der Längsachse im Wesentlichen mittig einen Verbindungsstift aufweist, der mit einem Schlitten des Unterbaus verbunden ist, und dass der Schlitten quer zur Längsachse beweglich zum Unterbau ist. Dies ermöglicht eine bewegliche Lagerung der Tischplatte quer zur Längsachse. Der Schlitten kann elastisch bewegbar sein, beispielsweise gefedert sein oder auch hauptsächlich zur Führung der Tischplatte dienen und nicht oder nur in sehr untergeordnetem Maße zur Energieaufnahme beitragen.

Wenn vorgesehen ist, dass der Unterbau zumindest ein Reibelement aufweist, das gefedert an der Tischplatte anliegt, so kann eine zusätzliche Dämpfung der Bewegung der Tischplatte zum Unterbau erreicht werden.

Es kann vorgesehen sein, dass der Unterbau zumindest ein Tischbein aufweist, das mit einem Fahrzeugboden verbindbar ist. Dies ermöglicht eine besonders gute Verbindung mit dem Fahrzeug. Abhängig von der Länge des Beines kann der Tisch in unterschiedlichen Höhen befestigt werden.

Besonders vorteilhaft ist, wenn der Sockel mit einer Fahrzeugwand des Fahrzeugs verbindbar ist. Insbesondere die seitliche Befestigung an einer Seitenwand des Fahrzeuges ist vorteilhaft.

In der Folge wird die vorliegende Erfindung anhand einer in den Figuren dargestellten nicht einschränkenden Ausführungsvariante näher erläutert. Es zeigen:
- Fig. 1: eine Ausführungsform eines erfindungsgemäßen Tisches in einer Einbaustellung in einem Fahrzeug einer schematischen Schrägansicht;
- Fig.2: eine Explosionsdarstellung des Sockels der Ausführungsform aus Fig. 1;
- Fig. 3: ein Detail des Unterbaus in einer Draufsticht.

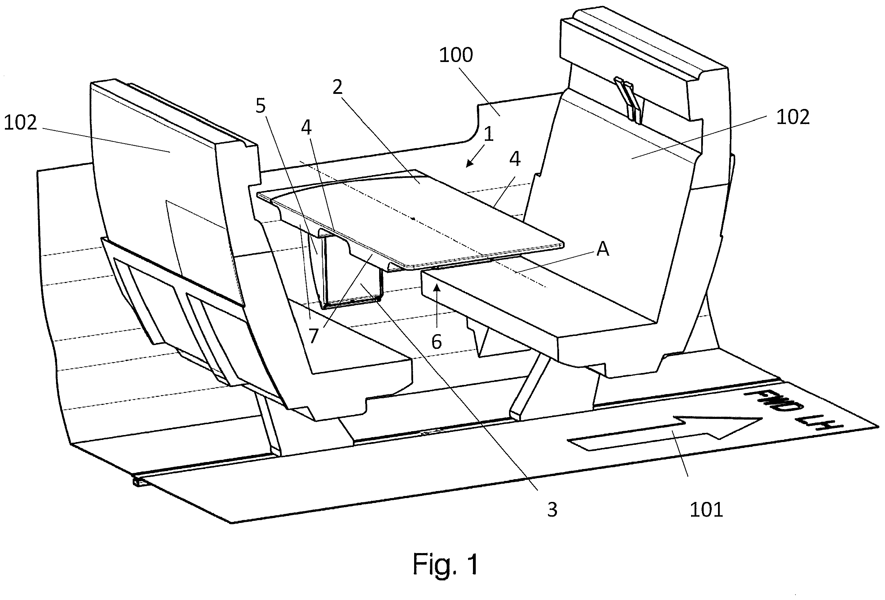

Fig. 1 zeigt einen erfindungsgemäßen Tisch 1 mit einer im Wesentlichen rechteckigen Tischplatte 2 und einem Sockel 3. Der Tisch 1 ist in einem teilweise dargestellten Fahrzeug, hier eines Zugwaggons, an einer Fahrzeugseitenwand 100 des Fahrzeugs angeordnet. Eine Längsachse A des Tisches 1 erstreckt sich parallel zu den längeren Seitenkanten 4 der Tischplatte 2 und liegt quer zu einer Fahrtrichtung 101 des Fahrzeugs. Der Sockel 3 weist ein im Wesentlichen vertikalen, an der Fahrzeugseitenwand 100 anliegenden Wandteil 5 und einen Unterbau 6 direkt unterhalb der Tischplatte 2 auf. Die Tischplatte 2 überragt an den Seitenkanten 4 den Unterbau 6 abschnittsweise und bildet damit an jeder Seite zwei verbreitete Aufprallflächen 7. An beiden Seitenkanten 4 der Tischplatte sind je zwei Sitzplätze 102 angeordnet, zwei in und zwei gegen die Fahrtrichtung 101. Dabei sind die Aufprallflächen 7 entlang der Fahrtrichtung 101 direkt vor den Sitzplätzen 102 angeordnet und bieten so eine größere Fläche, an denen Fahrgäste im Falle eines Zusammenstoßes auf dem Tisch 1 aufprallen können.

Auf Höhe der Tischplatte 2 weist das Wandteil 5 an der Fahrzeugseitenwand 100 einen zur Tischplatte 2 zeigenden, leicht abgerundeten Bereich auf, an der eine Breitkante der Tischplatte 2 anliegt. Diese Breitkante hat ebenso eine darauf abgestimmte, abgerundete Form. Ist nur einer der Sitzplätze 102 in Fahrtrichtung besetzt und kommt es zu einem Zusammenstoß, so kann sich damit die Tischplatte 2 in Bezug zum Sockel 3 leichter verdrehen, ohne dass es zu Beschädigungen des Sockels 3 oder der Tischplatte 2 kommt.

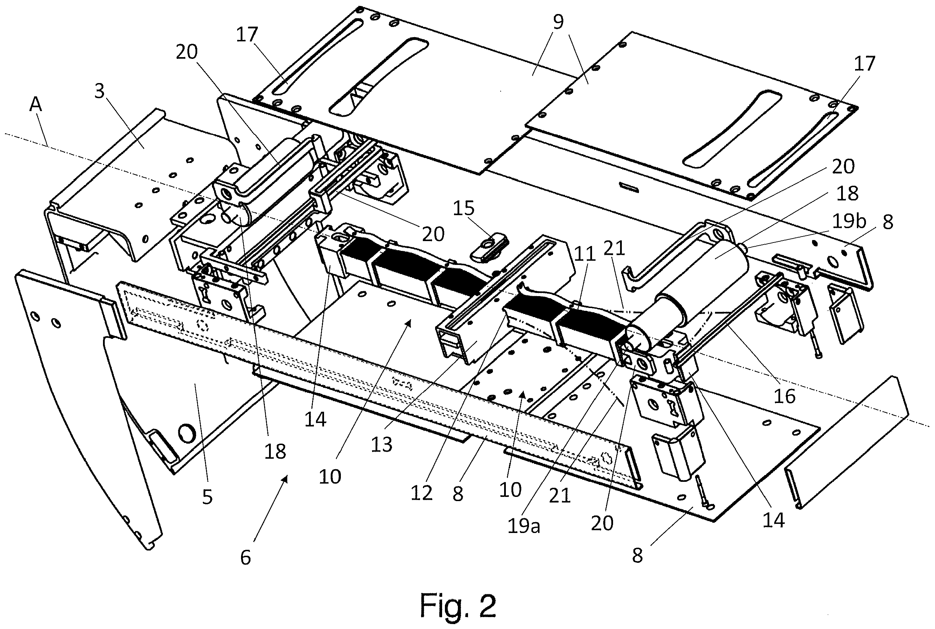

In Fig. 2 wird der Sockel 3 in einer Explosionsdarstellung gezeigt. Zur besseren Übersicht wurden dabei einige Bauteile wie Schrauben nicht oder nur teilweise dargestellt. Das Wandteil 5 des Sockels 3 ist aus hochfestem Stahl und/oder Aluminium hergestellt und erfüllt hauptsächlich die Aufgabe der statischen Halterung des Tisches 1. Es besteht aus einer an der Fahrzeugwand 100 anliegenden, der Kontur der Fahrzeugwand 100 entsprechenden Platte, sowie Seitenteilen. Der Unterbau 6 weist eine Hülle 8 aus Stahlplatten und/oder Aluminiumplatten auf, wobei auf der der Tischplatte 2 zugewandten Seite zwei mit Öffnungen versehenen Hüllenplatten 9 angeordnet sind. Im Inneren des Unterbaus 6 ist eine Verbindungsvorrichtung 10 angeordnet, welche einen Verbindungsbalken 11 aufweist, der als Blattfederpaket ausgeführt ist, sich im Wesentlichen entlang der Längsachse A erstreckt und in einem unbelasteten Zustand dargestellt ist. Dabei zeigen die Flächen der Blattfedern in oder gegen die Fahrtrichtung, die elastische Verformung ist also in oder gegen die Fahrtrichtung am besten möglich. Diese Verbiegungen quer zur Längsachse A und damit in oder gegen die Fahrtrichtung sind schematisch durch Linien 21 angedeutet.

Mittig entlang seiner Länge weist der Verbindungsbalken 11 einen Befestigungsbereich 12 auf, der mit einem Querbalken 13 des Unterbaus 6 fest verbunden ist. An den Enden des Verbindungsbalkens 11 sind Verbindungsstücke 14 mit zur Tischplatte 2 zeigenden Langlöchern angeordnet. Die Langlöcher erstrecken sich im unbelasteten Zustand des Verbindungsbalkens 11 entlang der Längsachse A und damit entlang der Länge des Verbindungsbalkens 11. Verbindungsstifte der Tischplatte 2 können in diese Langlöcher eingreifen und damit eine Verbindung herstellen. Das Blattfederpaket wird mit insgesamt vier Klammern zusammengehalten, zwei an jeder Seite des Verbindungsbalkens 11. Die Klammern sind dabei beweglich am Blattfederpaket angeordnet. Die Klammern sind über einen Gewebestreifen zusammengehalten, der als Positionierhilfe wirkt und sowohl mit den Klammern, als auch mit dem Querbalken 13 und den Verbindungsstücken 14 verbunden ist.

Der Querbalken 13 weist eine Führung auf, in der ein quer zur Längsachse A beweglicher Schlitten 15 angeordnet ist. Dieser weist eine Öffnung auf, in die ein Verbindungsstift der Tischplatte 2 eingreifen kann. Vorzugsweise ist der Verbindungsstift mittig an der Tischplatte 2 angeordnet.

An den Enden des Unterbaus 6 ist je eine Federstange 16 vorgesehen, die gefedert in Richtung der Tischplatte 2 gedrückt werden. Die Hüllenplatten 9 weisen Durchtrittsöffnungen 17 auf, durch die die Federstangen 16 hindurch auf die Unterseite der Tischplatte 2 gedrückt werden können. Die Federstangen 16 sind dabei an ihrer Oberseite mit einer reibenden Schicht wie etwa einer Filzschicht überzogen, die die Bewegungen der Tischplatte 2 dämpfen. Diese reibende Schicht kann auch auf der Unterseite der Tischplatte 2 angeordnet sein. Damit wirken die Federstangen 16 als Reibelemente. An den Enden des Unterbaus 6 entlang der Längsachse A ist auch je ein Sekundärelement 18 angeordnet, welches sich im Wesentlichen quer zur Längsachse A erstreckt. Sie weisen je zwei Endstücke 19a, 19b in Form von Zapfen auf, welche an Auflageflächen der Hülle 8 des Unterbaus 6 quer zur Längsachse A anliegen.

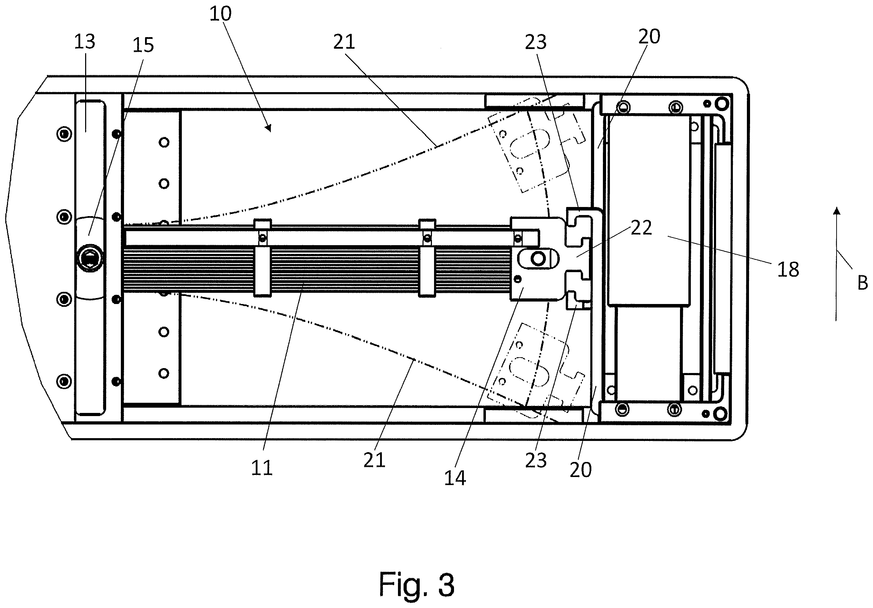

In Fig. 3 wird die Funktionsweise der Verbindungsvorrichtung 10 ersichtlich. Dazu wurde eine der Hüllenplatten 9 nicht dargestellt. Auf jedem Endstück 19a, 19b ist je ein Auflagestück 20 aufgesteckt, welches S-förmig aufgebaut ist, und sich von dem Endstück 19a, 19b, mit dem es in Verbindung steht, an der Seite des Sekundärelements 18 bis über die Hälfte der Länge des Sekundärelements 18 erstreckt. Die Auflagestücke 20 weisen dazu Öffnungen auf, in die die zapfenförmigen Endstücke 19a, 19b eingreifen können (ersichtlich in Fig. 2). Die Verbindungsstücke 14 weisen auf der zu den Sekundärelementen 18 zeigenden Seiten Anker 22 auf, die im unbelasteten Zustand der Tischplatte 2 Angriffshaken 23 der Auflagestücke 20 nicht berühren. Das Verbindungsstück 14 und Anker 22 sind einstückig sowie die Angriffshaken 23 und Auflagestücke 20 auch einstückig ausgeführt. Diese Auflagestücke 20 sind entlang der Längsachse A auf Höhe der Angriffshaken 23 aber beabstandet von diesen angeordnet. Wird die Tischplatte 2 in eine Richtung B bewegt, beispielsweise durch den Aufprall von bis zu zwei Passagieren, so wird der Verbindungsbalken 11 in eben diese Richtung elastisch verbogen. Bei nur geringer Verbiegung bleiben die Sekundärelemente 18 unverändert. Ist die Verbiegung so stark, dass die Anker 22 je einen der Angriffshaken 23 erreichen, die mit ersten Endstücken 19a verbunden sind, so wird die Verbindung zwischen Tischplatte 2 und Sekundärelement 18 geschlossen. Die ersten Endstücke 19a werden dadurch in Richtung der zweiten Endstücke 19b gedrückt, welche an dem Unterbau 6 anliegen und nicht bewegbar sind. Damit kommt es durch die weitere Bewegung der Tischplatte 2 zu einer elastischen Verformung der Sekundärelemente 18. So wird neben der Verbindung über den Verbindungsbalken 11 parallel dazu eine weitere Energie aufnehmende Verbindung zwischen Tischplatte 2 und Sockel 3 geschaffen. Bei der Bewegung der Tischplatte 2 in die entgegengesetzte Richtung verhält sich die Verbindungsvorrichtung 10 im Wesentlichen analog, wobei die Angriffshaken 23 verwendet werden, die mit den zweiten Endstücken 19b in Verbindung stehen.

Prallt nur eine Person außermittig auf die Tischplatte 2 auf, so kommt es durch die ungleiche Kraftbeaufschlagung zu einer Verdrehung der Tischplatte 2 oder einer sich überlagernden Bewegung von Verdrehung und Verschiebung.

Das Sekundärelement 18 ist zweiteilig als innen gefederter Stoßdämpfer aufgebaut.

Die in den Figuren beschriebene Ausführungsform ist für eine 4-Personen-Sitzgelegenheit ausgeführt, sodass also zwei Personen in und zwei Personen gegen Fahrtrichtung am Tisch sitzen. In einer alternativen Ausführungsform kann vorgesehen sein, dass nur eine Person in und eine Person entgegen der Fahrtrichtung sitzt. Dem entsprechend ist der Tisch kleiner ausgeführt, wobei vorzugsweise im Wesentlichen die gleiche Technologie verwendet werden kann, gegebenenfalls mit entsprechenden Adaptionen und Anpassungen. Dabei kann nur eine Hälfte des Tisches ausgeführt werden, sodass der Querbalken 13 an der Fahrzeugseitenwand 100 angeordnet wird und sich der Verbindungsbalken 11 nur in einer Richtung vom Querbalken 13 aus erstreckt. Dem entsprechend wäre dann vorzugsweise auch nur ein Sekundärelement 18 vorgesehen. Alternativ kann auch der gleiche Innenaufbau wie in den Figuren gezeigt vorgesehen sein, jedoch entlang der Seitenkanten 4 in kürzerer Ausführungsform, sodass an jeder Seitenkante 4 nur ein Sitz angeordnet wird. Prinzipiell besteht auch die Möglichkeit, Tische mit mehr als zwei Sitzplätzen in Fahrtrichtung, also mit drei oder vier Sitzplätzen vorzugsehen.

## Patentansprüche

1. Tisch (1) für ein Fahrzeug, wobei der Tisch (1) zumindest einen Sockel (3) zur Befestigung an dem Fahrzeug, sowie eine mit dem Sockel (3) verbundene Tischplatte (2) aufweist, und wobei die Tischplatte (2) über eine Verbindungsvorrichtung (10) in Bezug zum Sockel (3) quer zu einer Längsachse (A) des Tisches (1) elastisch bewegbar ist, **dadurch gekennzeichnet, dass** die Verbindungsvorrichtung (10) zumindest einen, sich im Wesentlichen entlang der Längsachse (A) erstreckenden, elastischen Verbindungsbalken (11) aufweist, über den die Tischplatte (2) mit dem Sockel (3) verbunden ist.

2. Tisch (1) nach Anspruch 1, **dadurch gekennzeichnet, dass** der Sockel (3) mit einem sich im Wesentlichen entlang der Längsachse (A) erstreckenden Unterbau (6) fest verbunden ist und die Tischplatte (2) auf dem Unterbau (6) elastisch bewegbar angeordnet ist.

3. Tisch (1) nach Anspruch 1 oder 2, **dadurch gekennzeichnet, dass** der Verbindungsbalken (6) an seinen Enden mit der Tischplatte (2) verbunden ist und in einem mittleren Befestigungsbereich (12) zwischen den Enden mit dem Sockel (3) verbunden ist.

4. Tisch (1) nach einem der Ansprüche 1 bis 3, **dadurch gekennzeichnet, dass** die Verbindungsvorrichtung (10) zumindest ein elastisch verformbares Sekundärelement (18) aufweist.

5. Tisch (1) nach Anspruch 4, **dadurch gekennzeichnet, dass** das elastisch verformbare Sekundärelement (18) parallel zum Verbindungsbalken (6) zwischen der Tischplatte (2) und dem Sockel (3) geschaltet ist.

6. Tisch (1) nach Anspruch 4 oder 5, **dadurch gekennzeichnet, dass** das Sekundärelement (18) zwei gegeneinander elastisch verschiebbare Endstücke (19a, 19b) aufweist und sich diese Endstücke (19a, 19b) an zwei gegenüberliegenden Auflageflächen des Unterbaus (6) abstützen, und dass zumindest ein Endstück (19a, 19b) über zumindest ein Auflagestück (20) mit der Tischplatte (2) in Verbindung steht.

7. Tisch (1) nach Anspruch 4, 5 oder 6, **dadurch gekennzeichnet, dass** ein mit der Tischplatte (2) verbundenes Verbindungsstück (14) quer zur Längsachse (A) vor oder hinter von zumindest einem mit dem Sekundärelement (18) verbundenen Auflagestück (20) angeordnet ist und dass im unbelasteten Zustand der Tischplatte (2) das Verbindungsstück (14) vom Auflagestück (20) beabstandet ist.

8. Tisch (1) nach Anspruch 7, **dadurch gekennzeichnet, dass** quer zur Längsachse (A) auf beiden Seiten vom Verbindungsstück (14) und in unbelasteten Zustand beabstandet je ein Auflagestück (20) angeordnet ist.

9. Tisch (1) nach Anspruch 7 oder 8, **dadurch gekennzeichnet, dass** das zumindest eine Verbindungsstück (14) an zumindest einem Ende des Verbindungsbalkens (11) angeordnet ist.

10. Tisch (1) nach einem der Ansprüche 1 bis 9, **dadurch gekennzeichnet, dass** der Verbindungsbalken (11) zumindest eine Blattfeder aufweist.

11. Tisch (1) nach einem der Ansprüche 1 bis 10, **dadurch gekennzeichnet, dass** die Tischplatte (2) entlang der Längsachse (A) im Wesentlichen mittig einen Verbindungsstift aufweist, der mit einem Schlitten (15) des Unterbaus (6) verbunden ist, und dass der Schlitten (15) quer zur Längsachse (A) beweglich zum Unterbau (6) ist.

12. Tisch (1) nach einem der Ansprüche 1 bis 11, **dadurch gekennzeichnet, dass** der Unterbau (6) zumindest ein Reibelement aufweist, das gefedert an der Tischplatte (2) anliegt.

13. Tisch (1) nach einem der Ansprüche 1 bis 12, **dadurch gekennzeichnet, dass** der Unterbau (6) zumindest ein Tischbein aufweist, das mit einem Fahrzeugboden verbindbar ist.

14. Tisch (1) nach einem der Ansprüche 1 bis 13, **dadurch gekennzeichnet, dass** der Sockel (3) mit einer Fahrzeugwand des Fahrzeugs verbindbar ist.

## Claims

1. Table (1) for a vehicle, wherein the table (1) has at least one base (3) for attachment to the vehicle, as well as a tabletop (2) connected to the base (3), and wherein the tabletop (2) is elastically movable relative to the base (3) transversely to a longitudinal axis (A) of the table (1) by way of a connecting device (10), **characterised in that** the connecting device (10) has at least one elastic connecting bar (11) which extends substantially along the longitudinal axis (A) and via which the tabletop (2) is connected to the base (3).

2. Table (1) according to claim 1, **characterised in that** the base (3) is fixedly connected to a substructure (6) which extends substantially along the longitudinal axis (A), and the tabletop (2) is arranged on the substructure (6) in an elastically movable manner.

3. Table (1) according to claim 1 or 2, **characterised in that** the connecting bar (6) is connected at its ends to the tabletop (2) and in a central attachment region (12) between the ends is connected to the base (3).

4. Table (1) according to any one of claims 1 to 3, **characterised in that** the connecting device (10) has at least one elastically deformable secondary element (18).

5. Table (1) according to claim 4, **characterised in that** the elastically deformable secondary element (18) is connected in parallel with the connecting bar (6) between the tabletop (2) and the base (3).

6. Table (1) according to claim 4 or 5, **characterised in that** the secondary element (18) has two end pieces (19a, 19b) which are elastically displaceable relative to one another, and said end pieces (19a, 19b) are supported against two opposite bearing surfaces of the substructure (6), and **in that** at least one end piece (19a, 19b) is connected to the tabletop (2) via at least one bearing piece (20).

7. Table (1) according to claim 4, 5 or 6, **characterised in that** a connecting piece (14) connected to the tabletop (2) is arranged transversely to the longitudinal axis (A) in front of or behind at least one bearing piece (20) connected to the secondary element (18), and **in that** in the unloaded state of the tabletop (2) the connecting piece (14) is at a distance from the bearing piece (20).

8. Table (1) according to claim 7, **characterised in that** a bearing piece (20) is arranged transversely to the longitudinal axis (A) on each side of the connecting piece (14) and at a distance from the latter in the unloaded state.

9. Table (1) according to claim 7 or 8, **characterised in that** the at least one connecting piece (14) is arranged at least at one end of the connecting bar (11).

10. Table (1) according to any one of claims 1 to 9, **characterised in that** the connecting bar (11) has at least one leaf spring.

11. Table (1) according to any one of claims 1 to 10, **characterised in that** the tabletop (2) has a connecting pin substantially centrally along the longitudinal axis (A), which connecting pin is connected to a slider (15) of the substructure (6), and **in that** the slider (15) is movable relative to the substructure (6) transversely to the longitudinal axis (A).

12. Table (1) according to any one of claims 1 to 11, **characterised in that** the substructure (6) has at least one friction element which bears against the tabletop (2) in a spring-loaded manner.

13. Table (1) according to any one of claims 1 to 12, **characterised in that** the substructure (6) has at least one table leg which can be connected to a vehicle floor.

14. Table (1) according to any one of claims 1 to 13, **characterised in that** the base (3) can be connected to a vehicle wall of the vehicle.

## Revendications

1. Table (1) pour un véhicule,
la table (1) ayant au moins un socle (3) pour sa fixation au véhicule ainsi qu'un plateau (2) relié au socle (3), et
- le plateau (2) est monté mobile élastiquement par un dispositif de liaison (10), par rapport au socle (3), transversalement à l'axe longitudinal (A) de la table (1),
table **caractérisée en ce que**
le dispositif de liaison (10) comporte au moins une poutre de liaison (11), élastique, s'étendant au moins pratiquement selon l'axe longitudinal (A) et par laquelle le plateau (2) est relié au socle (3).

2. Table (1) selon la revendication 1,
**caractérisée en ce que**
le socle (3) est relié solidairement à une infrastructure (6) s'étendant essentiellement le long de l'axe longitudinal (A) et le plateau (2) est monté mobile élastiquement sur l'infrastructure (6).

3. Table (1) selon la revendication 1 ou 2,
**caractérisée en ce que**
la poutre de liaison (6) est reliée par ses extrémités au plateau (2) et elle est reliée au socle (3) dans une zone médiane de fixation (12) entre les extrémités.

4. Table (1) selon l'une des revendications 1 à 3,
**caractérisée en ce que**
le dispositif de liaison (10) comporte un élément secondaire (18) au moins déformable élastiquement.

5. Table (1) selon la revendication 4,
**caractérisée en ce que**
l'élément secondaire déformable élastiquement (18) est monté parallèlement à la poutre de liaison (6) entre le plateau (2) et le socle (3).

6. Table (1) selon la revendication 4 ou 5,
**caractérisée en ce que**
l'élément secondaire (18) comporte des pièces d'extrémité (19a, 19b) coulissant élastiquement l'une par rapport à l'autre et ces pièces d'extrémité (19a, 19b) s'appuient contre deux surfaces d'appui de l'infrastructure (6) qui se font face, et
au moins une pièce d'extrémité (19a, 19b) est reliée au plateau (2) par au moins une pièce d'appui (20).

7. Table (1) selon la revendication 4, 5 ou 6,
**caractérisée en ce que**
une pièce de liaison (14) reliée au plateau (2) est montée transversalement à l'axe longitudinal (A) en avant ou en arrière d'au moins une pièce d'appui (20) reliée à l'élément secondaire (18), et
à l'état non sollicité du plateau (2), la pièce de liaison (14) est écartée de la pièce d'appui (20).

8. Table (1) selon la revendication 7,
**caractérisée par**
une pièce d'appui (20) respective des deux côtés de la pièce de liaison (14), qui est écartée transversalement à l'axe longitudinal (A) et à l'état non sollicité.

9. Table (1) selon la revendication 7 ou 8,
**caractérisée en ce que**
au moins une pièce de liaison (14) est prévue à au moins une extrémité de la poutre de liaison (11).

10. Table (1) selon l'une des revendications 1 à 9,
**caractérisée en ce que**
la poutre de liaison (11) comporte au moins un ressort-lame.

11. Table (1) selon l'une des revendications 1 à 10,
**caractérisée en ce que**
le plateau (2) comporte une broche de liaison pratiquement au milieu selon l'axe longitudinal (A), cette broche étant reliée à un chariot (15) de l'infrastructure (6) et le chariot (15) est mobile par rapport à l'infrastructure (6), transversalement à l'axe longitudinal (A).

12. Table (1) selon l'une des revendications 1 à 11,
**caractérisée en ce que**
l'infrastructure (6) comporte au moins un élément de friction qui s'appuie à ressort contre le plateau (2).

13. Table (1) selon l'une des revendications 1 à 12,
**caractérisée en ce que**
l'infrastructure (6) comporte au moins une jambe de table qui peut être reliée au plancher du véhicule.

14. Table (1) selon l'une des revendications 1 à 13,
**caractérisée en ce que**
le socle (3) est relié à la paroi du véhicule.
